# EUROPEAN PATENT SPECIFICATION

(11) **EP 4 306 618 B1**
(45) Date of publication and mention of the grant of the patent: **27.11.2024**
(21) Application number: 22184071.3
(22) Date of filing: 11.07.2022
(51) Int. Cl.: C10B 53/07, C10B 47/30

(54) **SYSTEM AND METHOD FOR TREATMENT OF POLYMER WASTE**
SYSTEM UND VERFAHREN ZUR BEHANDLUNG VON POLYMERABFÄLLEN
SYSTÈME ET PROCÉDÉ DE TRAITEMENT DES DÉCHETS DE POLYMÈRE

(43) Date of publication of application: 17.01.2024
(73) Proprietor: Neste Oyj, 02150 Espoo (FI)
(72) Inventor: KETOMÄKI, Mika, PORVOO (FI); SILTALA, Olli, PORVOO (FI); TUOHI, Eetu, PORVOO (FI); KETTUNEN, Mika T, PORVOO (FI); UOTILA, Perttu, PORVOO (FI); KUOKKA, Santeri, PORVOO (FI)
(74) Representative: Laine IP Oy

(56) References cited:
- WO-A1-99/09116
- DE-A1- 4 334 544
- US-A- 4 439 209
- US-A1- 2017 095 790

## Description

### FIELD

The present invention relates to a system for treatment of polymer waste.

Further, the present invention relates to a method for treatment of polymer waste.

### BACKGROUND

Polymers are used in a wide variety of products. The polymers are typically acquired through petroleum resources, which are considered non-renewable. In this connection, the need for a sustainable supply of raw material has arisen, as accumulation of polymer waste has been recognized as an environmental problem. As a consequence, polymer waste is often collected and sorted for recycling or thermal decomposition purposes. Environmental problems can be reduced by subsequent polymer waste material treatment and re-use of at least a part of the material.

For example, polymer waste material can be treated by pyrolysis, i.e. by thermal decomposition of the polymer waste material at elevated temperatures in an inert atmosphere, in order to obtain a product comprising a gas from at least partially pyrolyzed polymer waste. Such treatment may, for example, take place in a reactor, such as a rotary kiln reactor, into which polymer waste is fed. Typically, a carrier gas is further utilized to promote a flow, increase a flow velocity and to flush the process train of a gas from at least partially pyrolyzed polymer waste towards another section for aftertreatment. Nitrogen is a commonly used carrier gas, for instance. Other examples of a carrier gas are carbon dioxide or methane.

Document US 2017/095790 A1 discloses a reactor and its internals used for the thermal processing of a liquid mixture. The reactor comprises a hollow chamber comprising a plurality of spaces. The reactor further comprises a lance having a plurality of feed outlets for feeding organic liquids into each of the plurality of spaces. Additionally, the reactor comprises a heating system capable of heating each of the plurality of spaces.

Document DE 4334544 A1 further describes a system comprising a hollow reaction compartment, a heating system capable of controlling temperature conditions in the reaction compartment, a lance for feeding a feed into the reaction compartment and an injector for injecting a gas into the reaction compartment.

In view of the above, it would be beneficial to provide a system and method for treatment of polymer waste.

### SUMMARY OF THE INVENTION

The invention is defined by the features of the independent claims. Some specific embodiments are defined in the dependent claims.

According to a first aspect of the present invention, there is provided a system comprising a hollow chamber comprising a first space and a second space, wherein the second space is rotatable or the first space and the second space are rotatable, wherein the hollow chamber comprises a barrier between the first space and the second space, a heating system configured to heat the second space or to individually heat the first space and the second space, a polymer waste feed lance having at least one polymer waste feed outlet, wherein the polymer waste feed lance extends within the hollow chamber at least through the first space, and wherein the system is configured to feed polymer waste only into the second space via the at least one polymer waste feed outlet, and wherein an opening is provided between the barrier and the polymer waste feed lance, and at least one sweep fluid injector capable of injecting at least one sweep fluid into the first space or into the first space and into the second space in order to form a fluid flow towards at least one gas outlet for collecting a product comprising the at least one sweep fluid and a gas from at least partially pyrolyzed polymer waste.

Various embodiments of the first aspect may comprise at least one feature from the following bulleted list:
- the first space and the second space are individually rotatable
- the barrier is made of metal, a metal alloy, a high temperature resistant fabric or a combination thereof
- the system comprises a compressor arranged downstream of the gas outlet
- the hollow chamber is at least partially arranged within a housing comprising the heating system, wherein the heating system comprises a first heating space configured to receive a first heating gas having a first temperature and a second heating space configured to receive a second heating gas having a second temperature, wherein the first heating space is aligned with the first space and the second heating space is aligned with the second space,
- the hollow chamber is at least partially arranged within a housing comprising the heating system, wherein the heating system comprises only the second heating space configured to receive the second heating gas having a second temperature, wherein the second heating space is aligned with the second space
- the second heating space comprises a plurality of heating zones, wherein each heating zone is configured to receive a heating gas having a specific temperature
- the system further comprises at least one movable steel ball or chain arranged within the first space
- the system further comprises at least one structure protruding in the first space from an inner surface of the hollow chamber into the chamber
- the system is configured to inject via the at least one sweep fluid injector at least one of: a condensable gas, steam, water, a non-condensable gas, nitrogen, or a hydrocarbon such as pyrolysis oil or diesel
- the second chamber comprises at least one residue outlet
- each of the first space and the second space comprises at least one residue outlet
- the gas outlet is comprised either by the first space or the second space

According to a second aspect of the present invention, there is provided a method comprising providing a hollow chamber comprising a first space and a second space, wherein the second space is rotated or the first space and the second space are rotated, heating the second space or individually heating the first space and the second space, providing a polymer waste feed lance having at least one polymer waste feed outlet, wherein the polymer waste feed lance extends within the hollow chamber at least through the first space, and feeding polymer waste only into the second space via the at least one polymer waste feed outlet, wherein an opening is provided between the barrier and the polymer waste feed lance, injecting at least one sweep fluid by at least one sweep fluid injector into the first space or into the first space and into the second space in order to form a fluid flow towards at least one gas outlet for collecting a product comprising the at least one sweep fluid and a gas from at least partially pyrolyzed polymer waste.

Various embodiments of the second aspect may comprise at least one feature from the following bulleted list:
- the method further comprises individually rotating the first space and the second space
- a wall temperature of the hollow chamber is in the first space and in the second space in a range between 500 - 800 °C
- the method further comprises arranging the hollow chamber at least partially within a housing having a first heating space and a second heating space, receiving a first heating gas having a first temperature in the first heating space, wherein the first heating space is aligned with the first space, and receiving a second heating gas having a second temperature in the second heating space, wherein the second heating space is aligned with the second space
- the method further comprises arranging the hollow chamber at least partially within a housing comprising the heating system, wherein the heating system comprises only the second heating space configured to receive the second heating gas having a second temperature, wherein the second heating space is aligned with the second space
- the method further comprises individually heating a plurality of heating zones comprised by the second space, wherein each heating zone is configured to receive a heating gas having a specific temperature
- the sweep fluid is at least one of: a condensable gas, steam, water, a non-condensable gas, nitrogen, or a hydrocarbon such as pyrolysis oil or diesel
- a pressure gradient between the hollow chamber and the at least one gas outlet is in a range between 0.1 - 5 kPa, for example 0.5 - 2 kPa
- the method further comprises pre-melting or extruding the polymer waste prior to feeding the polymer waste into the second space
- the method further comprises liquifying the collected gas downstream of the gas outlet

Considerable advantages are obtained by certain embodiments of the invention. In particular, a system and method for treatment of polymer waste are provided. The system comprises a hollow chamber having a first space and a second space, wherein the second space is rotatable or the first space and the second space are rotatable. A sweep fluid can be injected into the first space and polymer waste material can be fed into the second space. A product comprising the at least one sweep fluid and a gas from at least partially pyrolyzed polymer waste is collected during operation of the reactor for aftertreatment. According to certain embodiments, a fluid flow is formed due to a pressure gradient between the first space and the second space, and thus a blowback of the gas from at least partially pyrolyzed polymer waste can be avoided. Use of a condensable gas, steam or water as a sweep fluid is beneficial for aftertreatment purposes, as the sweep fluid can be easily separated or removed from the product by condensation in the aftertreatment process. Removal of the sweep fluid or carrier gas not contributing to a liquid product yield in polymer waste pyrolysis can improve the recovery of hydrocarbons. Use of hydrocarbons or use of hydrocarbons containing water as a sweep fluid is beneficial for reducing the water content in the system, thus reducing the need for water separation and waste water management at a later stage. Maximizing the liquid product recovery is highly important for the techno-economic performance and sustainability of polymer waste pyrolysis processes. Additionally, the condensation train of a polymer waste material pyrolysis system is typically designed to remove pyrolytic water, and therefore feeding water or steam into the first space of the reactor does not bring significant additional complexity into the process.

### BRIEF DESCRIPTION OF THE DRAWINGS

FIGURE 1 illustrates a schematic view of a system in accordance with at least some embodiments of the present invention,
FIGURE 2 illustrates a schematic view of a heating system of a system in accordance with at least some embodiments of the present invention,
FIGURE 3 illustrates a schematic view of another heating system in accordance with at least some embodiments of the present invention,
FIGURE 4 illustrates a schematic view of a detail of a heating system in accordance with at least some embodiments of the present invention,
FIGURE 5 illustrates a schematic view of a detail of a hollow chamber of a system in accordance with at least some embodiments of the present invention,
FIGURE 6 illustrates a schematic view of a further detail of a hollow chamber of a system in accordance with at least some embodiments of the present invention,
FIGURE 7 illustrates a schematic view of an even further detail of a hollow chamber of a system in accordance with at least some embodiments of the present invention,
FIGURE 8 illustrates a schematic view of a yet further detail of a hollow chamber of a system in accordance with at least some embodiments of the present invention,
FIGURE 9 illustrates a schematic view of a detail of a system in accordance with at least some embodiments of the present invention, and
FIGURE 10 illustrates a schematic view of a system in accordance with at least some embodiments of the present invention.

### EMBODIMENTS

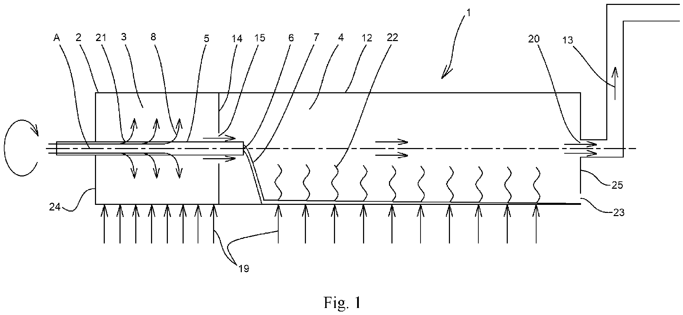

In FIGURE 1 a schematic view of a system 1 in accordance with at least some embodiments of the present invention is illustrated. The system 1 comprises a so-called reactor or rotary kiln reactor, particularly for thermal decomposition of materials at elevated temperatures in presence of no or low amount of oxygen to avoid combustion of hydrocarbons. This process is also called pyrolysis.

Particularly, the system 1 comprises a hollow chamber 2 comprising a first space 3 and a second space 4. Both the first space and the second space are rotatable. The system 1 is configured to treat polymer waste 7. In this document, the term "polymer waste" relates to a material that comprises mainly a polymer material. For example, impurities in the polymer material may be present. Typically, the polymer waste 7 is material collected for recycling or thermal decomposition purposes. An example polymer waste feedstock used according to certain embodiments includes polyethylene with varying amounts of at least one of: polypropylene, polystyrene and other components such as polyamides, polyethylene terephthalate and polyvinyl chloride. Polymer waste feedstocks may be contaminated with minor traces of impurities that originate e.g. from biomass.

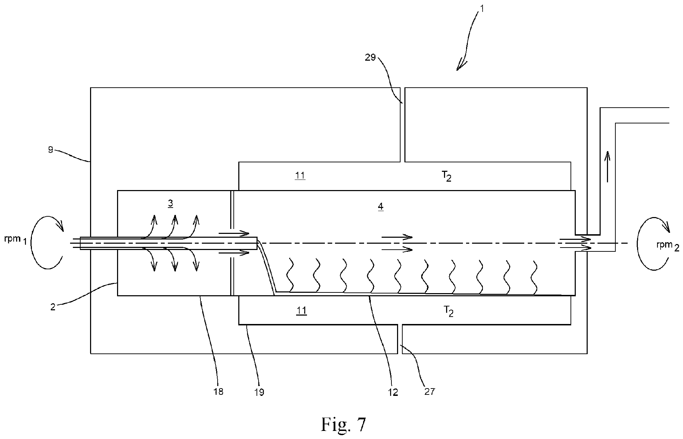

The hollow chamber 2 is typically in the form of an elongated hollow cylinder. The term "elongated" means that a length of the hollow cylinder is substantially greater than a diameter of the hollow cylinder. For example, the length of the hollow cylinder may be 18 m and the diameter of the hollow cylinder may be 2 m. The hollow chamber 2 is typically made of a metal or metal alloy. The entire hollow chamber 2 is configured to be rotated around an axis of rotation A. The axis of rotation A is typically orientated horizontally or substantially horizontally. The term "axis orientated horizontally" means an axis that is orientated perpendicular to a gravity vector or perpendicular to the normal on the surface of the Earth. Similarly, the term "axis orientated substantially horizontally" means an axis that is tilted a few degrees, for example less than 10 degrees, from the axis that is orientated perpendicular to a gravity vector or perpendicular to the normal on the surface of the Earth. The rotational speed of the entire hollow chamber 2 may be, for example, in the range between 0.1 and 5 revolutions per minute (rpm), for example in the range between 1 and 2 rpm. The first space 3 and the second space 4 rotate both simultaneously in the embodiment of FIGURE 1. According to other embodiments, only the second space 4 is rotated or both the first space 3 and the second space are individually rotated as described in connection with FIGURE 7.

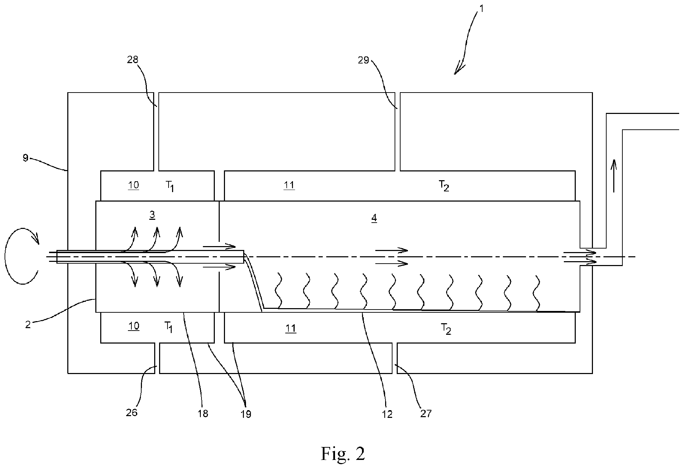

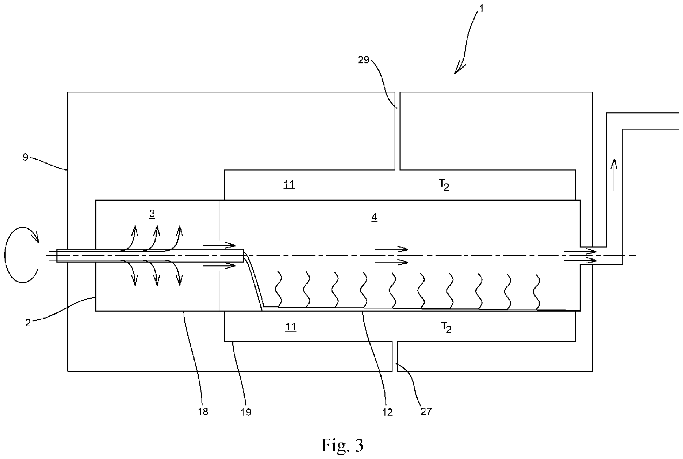

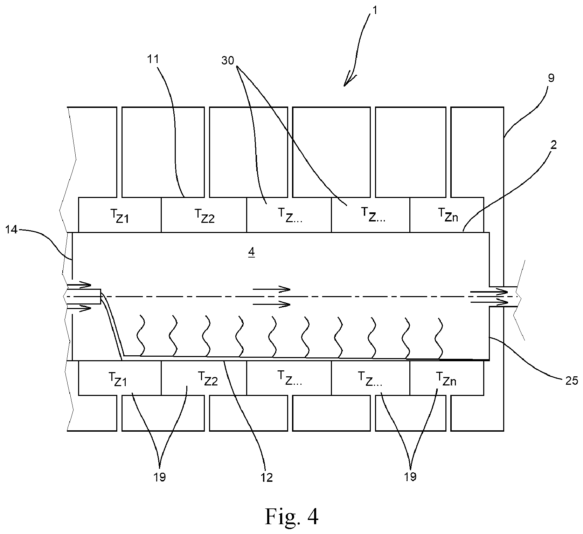

The system further comprises a heating system 19 configured to individually heat the first space 3 and the second space 4. The heating system 19 is typically arranged external to the walls of the hollow chamber 2 as indicated by arrows 19. Heating of the first space 3 and the second space 4 takes place by increasing a wall temperature of the rotatable hollow chamber 2 by contacting the wall with heating gas, in particular a lateral area of the rotatable hollow chamber, from ambient temperature to a temperature in the range between 200°C and 800°C. Typically, the wall temperature in the lateral area of the first space 3 is different from the wall temperature in the lateral area of the second space 4. As a consequence, different temperatures can be provided within the first space 3 and within the second space 4, if required. The temperature within the first space 3 may be, for example, 550 °C and the temperature within the second space 4 may be, for example, 600 °C. Typically, the temperature within the second space 4 is greater than the temperature within the first space 3. In other words, the system 1 is configured to adjust the temperature within the first space 3 and the temperature within the second space 4 by means of the heating system 19. The temperature within the second space 4 is typically greater than a decomposition temperature of a polymer waste material. An example of a heating system 19 for the shown embodiment is illustrated in FIGURE 2. According to another embodiment of the present invention, only the second space 4 is heated as shown in FIGURE 3. According to a further embodiment of the present invention, the wall of the second space 4 can be divided into sub-zones or heating zones which can be heated individually as shown in FIGURE 4.

The system 1 yet further comprises a polymer waste feed lance 5 having at least one polymer waste feed outlet 6. The polymer waste feed lance 5 is stationary, i.e. the polymer waste feed lance 5 is not configured to rotate and the rotatable hollow chamber 2 is configured to rotate around the polymer waste feed lance 5. The polymer waste feed lance 5 may be, for example, in the form of a hollow cylinder. A center axis of the polymer waste feed lance 5 is typically arranged or orientated coaxially with the axis of rotation A. The polymer waste feed lance 5 is typically made of metal or a metal alloy. The polymer waste feed lance 5 extends within the hollow chamber 2 at least through the first space 3. The polymer waste feed lance 5 may additionally extend partially into the second space 4 as shown in FIGURE 1. The system 1 is configured to feed polymer waste 7 into the second space 4 via the at least one polymer waste feed outlet 6. The polymer waste feed lance 5 is comprised by or coupled to a feeding system (not shown). The feeding system is typically an extrusion-type feeding system. The polymer waste 7 is (predominantly) pre-molten so that the feed is converted into a flowable form allowing travelling through the polymer waste feed lance 5.

The polymer waste 7 material fed into the second space 4 via the at least one polymer waste feed outlet 6 of the polymer waste feed lance 5 falls on a heated inner surface 12 of the rotatable hollow chamber 2 due to gravity. The rotation of the hollow chamber 2 causes the polymer waste material 7 to distribute over at least a part of the inner surface 12 of the chamber 2 in the second space 4. Distribution of the polymer waste material 7 over at least a part of the inner surface 12 of the chamber 2 in the second space 4 may be improved by tilting the rotatable hollow chamber 2 a few degrees, for example 3 degrees to 5 degrees from the horizontal axis. In such a configuration, the rotatable hollow chamber 2 is arranged substantially horizontally.

The high temperature wall of the hollow chamber 2 causes thermal decomposition of the polymer waste material 7 within the second space 4, thus converting the polymer waste material 7 into a gas 22 from at least partially pyrolyzed polymer waste and a residue. The residue may comprise inorganics or inorganic contaminants, for instance. The rotatable hollow chamber 2 typically comprises a residue outlet 23 at a rear end 25 of the chamber 2.

The hollow chamber 2 further comprises a barrier 14 or seal between the first space 3 and the second space 4. The barrier 14 or seal is configured to allow a fluid flow, particularly a gas flow, from the first space 3 to the second space 4. An opening 15 is provided between the barrier 14 and the lance 5. The opening 15 may be permeable for the sweep fluid to flow into the direction from the first space 3 into the second space 4, but impermeable into the opposite direction. The barrier 14 or seal may alternatively also comprise features allowing gas flow, i.a., a plurality of perforations, for instance. The barrier 14 is typically made of metal, a metal alloy or a high temperature resistant fabric.

The system 1 even further comprises at least one sweep fluid injector 21 capable of injecting at least one sweep fluid 8 into the first space 3. Within the embodiments shown in FIGURES 1 - 9, the term "sweep fluid injector" means a specific unit for injecting the at least one sweep fluid 8 into the first space 3. Such sweep fluid injector 21 may, for example, comprise at least one sweep fluid injection lance extending into the first space 3. Such sweep fluid injector 21 may, for example, comprise a nozzle. Alternatively, the term "sweep fluid injector" may also mean a simple opening in the system 1 through which the at least one sweep fluid 8 can be guided into the first space 3. The system 1 may also comprise a plurality of sweep fluid injectors 21, wherein each sweep fluid injector 21 is capable of injecting a different sweep pluid 8 into the first space 3. One sweep fluid injector 21 may be, for example, arranged to inject a condensable gas into the first space 3 and another sweep fluid injector 21 may be, for example, arranged to inject a non-condensable gas into the first space 3, such that the injection of sweep fluid is performed independently from each other with the respective use of condensable gas and non-condensable gas. In a preferred embodiment, steam as the condensable gas is being injected via cavity 31.

The plurality of sweep fluid injectors 21 may be, for example, each provided in the form of a separate sweep fluid injection lance. Such sweep fluid injection lances may be, for example, arranged around the polymer waste feed lance 5. In such cases, a protective tube covering at least a part of the plurality of injection lances and at least a part of the polymer waste feed lance 5 may be further provided. As a consequence, various sweep fluids 8 may be guided through at least a part of the protective tube, but separately from the polymer waste feed. The protective tube as well as the polymer waste feed lance 5 and the plurality of injection lances arranged within the protective tube are stationary, i.e. not configured to rotate. Openings may be further instead or in addition provided through the front end 24 of the hollow chamber 2 for guiding at least one sweep fluid 8 into the first space 3, for instance. The at least one sweep fluid injector 21 may be comprised by the polymer waste feed lance 5 or independent from the polymer waste feed lance 5.

A pressure gradient between the first space 3 and the second space 4 is generated so that a fluid flow, particularly a gas flow, is formed in a direction from the first space 3 to the second space 4, particularly towards a gas outlet 20. In other words, a sweep fluid is used to enhance the flow from the first space 3 to the second space 4. The pressure gradient further enhances the flow downstream towards an aftertreatment section (not shown). Injecting the sweep fluid 8 into the first space 3 causes the pressure in the first space 3 to increase so that the pressure in the first space 3 is greater than the pressure in the second space 4. The pressure gradient may be, for example, in the range between 0.1 and 5 kPa, for example in the range between 0.5 and 2 kPa. A mass flow of the sweep fluid through the at least one sweep fluid injector 21 and/or a flow velocity may be adjustable in order to vary the pressure gradient. The pressure within the first space 3 and within the second space 4 can be monitored utilizing pressure sensors, respectively.

The sweep fluid 8 may be, for example, at least one of a condensable gas, steam, water, a non-condensable gas, nitrogen, a hydrocarbon, or diesel. As described above, also combinations of aforementioned sweep fluids 8 may be simultaneously injected into the first space 3. Water may be, for example, sprayed via at least one nozzle comprised by the at least one sweep fluid injector 21 into the first space 3 or directly on a heated inner surface of the wall of the hollow chamber 2 in the first space 3, thus causing the water spray to instantly vaporize and to generate steam in-situ inside the reactor, thus eliminating the need for a separate steam generating unit. The sweep fluid is then allowed to flow from the first space 3 into the second space 4, for example via opening 15. The fluid flow from the first space 3 into the second space 4 avoids a blowback of the gas 22 from at least partially pyrolyzed polymer waste. Use of a condensable gas, steam or water as a sweep fluid 8 is beneficial for aftertreatment purposes, when the sweep fluid 8 has to be separated from the product 13 at a later stage.

Additionally, the system comprises a gas outlet 20 arranged downstream of the at least one polymer waste feed outlet 6 for collecting a product 13 comprising the at least one sweep fluid 8 and a gas 22 from at least partially pyrolyzed polymer waste.

According to certain embodiments, a compressor (not shown) may be optionally provided downstream of the gas outlet 20 for improving or assisting the flow of the product 13. The compressor may be also useful to keep the pressure within the first space 3 at a specific pressure, for example at atmospheric pressure, and to provide a pressure lower than the specific pressure within the second space 4. In other words, the pressure within the first space 3 and the second space 4 may be adjusted by injecting the sweep fluid 8 into the first zone 3 and utilizing the compressor. The compressor is capable of controlling the pressure in an area where the gas outlet 20 is located. The injection of sweep fluid 8 ensures that no air is entering the system 1 and is also used to ensure that a backflow is avoided and to reduce any possible disturbance in the gas flow. Since the system 1 may, for example, operate under slight vacuum, it is prone to having an air leak into the system 1. This could lead to combustion of hydrocarbons and result in fire and/or explosion. The combination of the compressor and the injection of sweep fluid 8 works as a system to provide guidance of pyrolysis gas towards the outlet 20. In case that the normal vacuum condition is lost, injection of sweep fluid 8 can prevent hydrocarbons from leaking out of the system 1.

Typically, a reduced pressure is provided at the location of the at least one gas outlet 20 to create a vacuum in order to remove the at least one sweep fluid 8 and the gas 22 from at least partially pyrolyzed polymer waste from the respective spaces 3, 4.

In FIGURE 2 a schematic view of a heating system 19 of a system 1 in accordance with at least some embodiments of the present invention is illustrated. The hollow chamber 2 of FIGURE 1 is arranged within a housing 9. The heating system 19 has a first heating space 10 configured to receive a first heating gas having a first temperature T₁. The first heating gas may be guided into the first heating space 10 via at least one first heating gas inlet 26 and guided out of the first heating space 10 via at least one first heating gas outlet 28. Further, the heating system 19 has a second heating space 11 configured to receive a second heating gas having a second temperature T₂. The second heating gas may be guided into the second heating space 11 via at least one second heating gas inlet 27 and guided out of the second heating space 11 via at least one second heating gas outlet 29. As can be seen, the first heating space 10 is aligned with or arranged adjacent to the first space 3 and the second heating space 11 is aligned with or arranged adjacent to the second space 4. The first heating space 10 may be in the form of a first heating chamber having a ring-like cross-section, for instance. The second heating space 11 may be in the form of a second heating chamber having a ring-like cross-section, for instance. The first heating gas and the second heating gas may be identical or different from each other. As a consequence, the first space 3 and the second space 4 can be individually heated by heating the wall 18 of the rotatable hollow chamber 2. The temperature of the wall 18 of the rotatable chamber 2 can be adjusted by varying the first temperature T₁ of the first heating gas and/or the second temperature T₂ of the second heating gas. The wall temperature of the hollow chamber 2 may be, for example, in the first space 3 and in the second space 4 in a range between 200 °C and 800 °C. The temperature within the first space 3 and the second space 4 may be identical or different from each other. For example, the temperature within the first space 3 may be 600 °C and the second space 4 may be 550 °C.

In FIGURE 3 a schematic view of another heating system 19 in accordance with at least some embodiments of the present invention is illustrated. As can be seen, the heating system 19 is configured to only heat the second space 4. In such a configuration, it is not possible to spray water into the first space 3 as a sweep fluid. However, any sweep fluid in gaseous form may be injected into the first space 3. For example, steam generated by a steam generator may be injected into the first space 3 via the at least one injector.

In FIGURE 4 a schematic view of a detail of a heating system 19 in accordance with at least some embodiments of the present invention is illustrated. As can be seen, the second heating space 11 comprises a plurality of heating zones 30, wherein each heating zone 30 is configured to receive a heating gas having a specific temperature T_{Z1}, ..., T_{Zn}. The number of heating zones 30 can be any integer number greater than n=1. As a consequence, the heating zones 30 can be heated with different or identical temperatures Tzi, ..., T_{Zn}, for instance. the temperatures T_{Z1}, ..., T_{Zn} are typically adjustable. For each heating zone 30 at least one heating gas inlet and at least one heating gas outlet are provided. Therefore, it is possible to heat each heating zone individually in order to generate a temperature gradient within areas of the second space 4. In other words, different thermo-zones are thus formed between adjacent areas within the second space 4 due to the different heating zones 30. For example, a temperature may be greater within an area of the second space 4 in a direction upstream of the direction of flow of the sweep fluid 8. The concept of heating zones 30 may be incorporated into the heating system 19 as e.g. shown in FIGURE 2 or FIGURE 3, i.e. either into an embodiment having a heating system 19 comprising a first heating space 10 and a second heating space 11 or into an embodiment having a heating system 19 comprising only the second heating space 11.

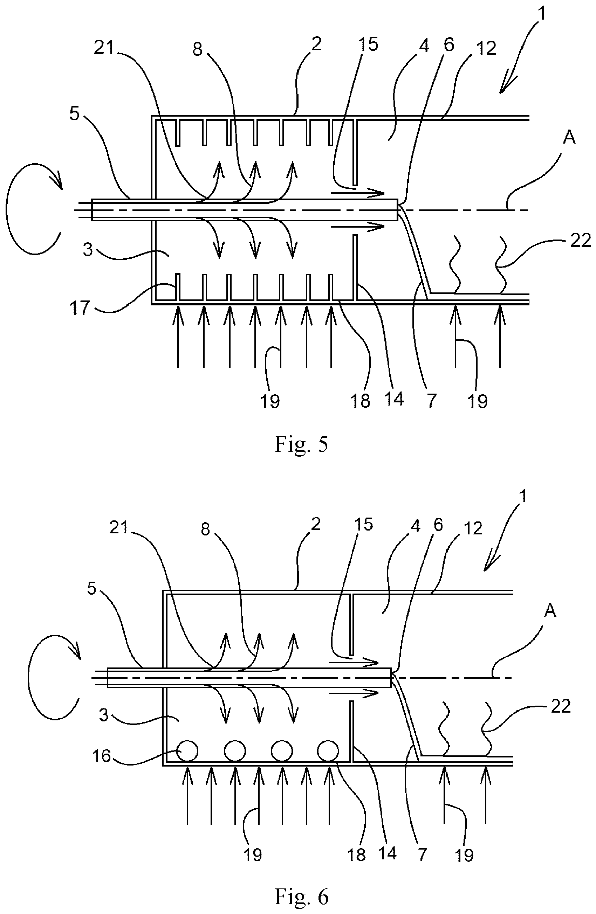

In FIGURE 5 a schematic view of a detail of a hollow chamber 2 of a system 1 in accordance with at least some embodiments of the present invention is illustrated. The system 1 comprises at least one structure 17 protruding in the first space 3 from an inner surface 18 of the rotatable hollow chamber 2 into the chamber 2. The at least one structure 17 is a static or fixed structure. For example, a plurality of structures 17 in the form of plates may be arranged within the first space 3. The plurality of plates is particularly beneficial for heat exchange within the first space 3. Heat provided by the heating system 19 can be transferred into and distributed within the first space 3 of the hollow chamber 2 in order to quickly adjust or vary the temperature within the first space 3. The plurality of the at least one structure 17 is typically, but not necessarily, made of the same material as the hollow chamber 2. The material of the at least one structure has typically beneficial heat conducting properties.

In FIGURE 6 a schematic view of a further detail of a rotatable hollow chamber 2 of a system 1 in accordance with at least some embodiments of the present invention is illustrated. The system 1 comprises at least one movable object 16 arranged within the first space 3 of the rotatable hollow chamber 2. For example, the at least one movable object 16 may be a steel ball rolling within the first space 3 during rotation of the hollow chamber 2. Instead or in addition, the movable object may be a chain, for instance. The at least one movable object 16 is typically, but not necessarily, made of the same material as the hollow chamber 2. The material of the at least one movable object 16 has typically beneficial heat conducting properties. A further benefit of the at least one movable object 16 lies in that the movable object 16 scrapes the the inner surface 18 of the first space 3 during rotation of the hollow chamber 2 for cleaning purposes.

In FIGURE 7 a schematic view of an even further detail of a hollow chamber 2 of a system 1 in accordance with at least some embodiments of the present invention is illustrated. According to the shown embodiment, the first space 3 and the second space 4 are rotated individually. In other words, the rotational speed of the first space 3 may be different from the rotational speed of the second space 4 as indicated by arrows rpm₁, rpm₂. The rotational speed of each of the first space 3 and the second space 4 may be, for example, in the range between 0.1 and 5 revolutions per minute (rpm), for example in the range between 1 and 2 rpm. However, both the first space 3 and the second space 4 or only the second space 4 may be heated as described above.

According to certain other embodiments, only the second space 4 is rotated and the first space 3 remains stationary. In such a configuration, there are no movable objects present within the first space 3 as described in connection with FIGURE 6. However, both the first space 3 and the second space 4 or only the second space 4 may be heated as described above.

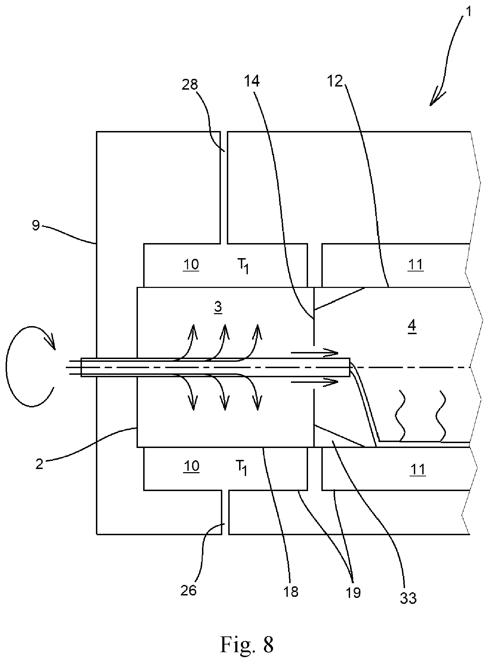

In FIGURE 8 a schematic view of a yet further detail of a hollow chamber 2 of a system 1 in accordance with at least some embodiments of the present invention is illustrated. The inner wall surface 12 within the second space 4 may be partially conical in order to prevent plastic waste material from being distributed in a direction towards the barrier 14. The partially conical inner wall surface may be, for example, obtained by welding a hollow insert 33 having a conical inner surface to the barrier 14 and the inner wall of the hollow chamber 2 within the second space 4.

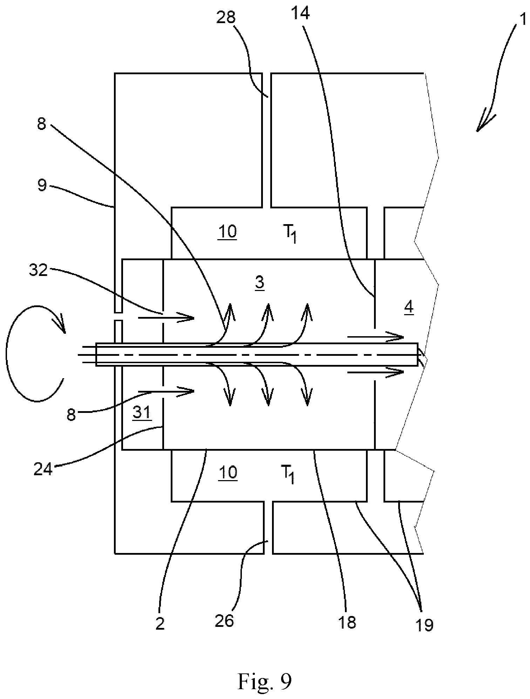

In FIGURE 9 a schematic view of a detail of a system 1 in accordance with at least some embodiments of the present invention is illustrated. The housing 9 comprises a cavity 31 or space into which a sweep fluid 8 in gaseous form can be guided. A plurality of borings 32 is further provided through the front end 24 of the hollow chamber 2. Thus, the sweep fluid 8 in gaseous form can flow into the first space 3 through the borings 32. The sweep fluid 8 in gaseous form can be guided into the first space 3 in systems 1 having a stationary first space 3 or in systems 1 having either individually or simultaneously rotating first and second spaces 3, 4. The cavity 31 as such is not being rotated. In other words, the detail shown in FIGURE 9 represents a sweep fluid injector 21 for injecting a sweep fluid 8 into the first space 3. One or more other sweep fluids 8 may be additionally injected into the first space 3, for example by utilizing one or more sweep fluid lances as described above.

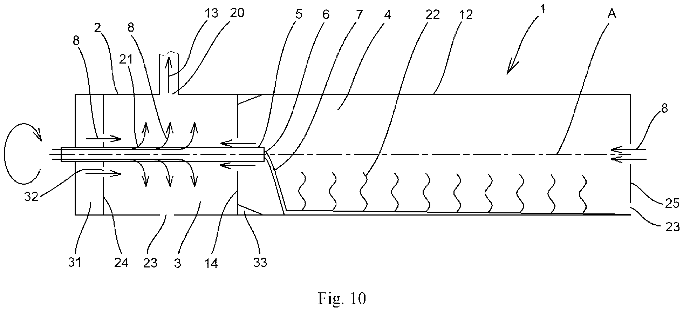

In FIGURE 10 a schematic view of a system 1 in accordance with at least some embodiments of the present invention is illustrated. The system 1 comprises a so-called reactor or rotary kiln reactor, particularly for thermal decomposition of materials at elevated temperatures in presence of no or low amount of oxygen to avoid combustion of hydrocarbons. This process is also called pyrolysis.

The operating principle of the shown embodiment differs from the operating principle of the embodiments shown in FIGURES 1- 9. Particularly, at least one sweep fluid 8 is injected into both the first space 3 and the second space 4, both comprised by a hollow chamber 2.

The hollow chamber 2 is typically in the form of an elongated hollow cylinder. The term "elongated" means that a length of the hollow cylinder is substantially greater than a diameter of the hollow cylinder. For example, the length of the hollow cylinder may be 18 m and the diameter of the hollow cylinder may be 2 m. The hollow chamber 2 is typically made of a metal or metal alloy. At least the second space 4 is configured to be rotated around an axis of rotation A. The axis of rotation A is typically orientated horizontally or substantially horizontally. The term "axis orientated horizontally" means an axis that is orientated perpendicular to a gravity vector or perpendicular to the normal on the surface of the Earth. Similarly, the term "axis orientated substantially horizontally" means an axis that is tilted a few degrees, for example less than 10 degrees, from the axis that is orientated perpendicular to a gravity vector or perpendicular to the normal on the surface of the Earth. Only the second space 4 may be configured to rotate in the shown embodiment of FIGURE 10. According to other embodiments, both the first space 3 and the second space 4 are simultaneously rotated as disclosed in connection with FIGURE 1 or both the first space 3 and the second space 4 are individually rotated as described in connection with FIGURE 7. The rotational speed of the first space 3 and/or the second space 4 may be, for example, in the range between 0.1 and 5 revolutions per minute (rpm), for example in the range between 1 and 2 rpm.

The system further comprises a heating system (not shown) as described above in connection with any one of FIGURES 1 - 4. i.e., both the first and the second spaces 3, 4 are heated individually or only the second space 4 is heated. It may be further possible to heat heating zones of the second space 4 individually in order to generate a temperature gradient within areas of the second space 4.

The system 1 yet further comprises a polymer waste feed lance 5 having at least one polymer waste feed outlet 6. The polymer waste feed lance 5 is stationary, i.e. the polymer waste feed lance 5 is not configured to rotate and at least a part of the hollow chamber 2 is configured to rotate around the polymer waste feed lance 5. The polymer waste feed lance 5 may be, for example, in the form of a hollow cylinder. A center axis of the polymer waste feed lance 5 is typically arranged or orientated coaxially with the axis of rotation A. The polymer waste feed lance 5 is typically made of metal or a metal alloy. The polymer waste feed lance 5 extends within the hollow chamber 2 at least through the first space 3. The polymer waste feed lance 5 may additionally extend partially into the second space 4 as shown in FIGURE 10. The system 1 is configured to feed polymer waste 7 into the second space 4 via the at least one polymer waste feed outlet 6. The polymer waste feed lance 5 is comprised by or coupled to a feeding system (not shown). The feeding system is typically an extrusion-type feeding system. The polymer waste 7 is (predominantly) pre-molten so that the feed is converted into a flowable form allowing travelling through the polymer waste feed lance 5.

The polymer waste 7 material fed into the second space 4 via the at least one polymer waste feed outlet 6 of the polymer waste feed lance 5 falls on a heated inner surface 12 of the second space 4 due to gravity. The rotation of the second space 4 causes the polymer waste material 7 to distribute over at least a part of the inner surface 12 of the second space 4. Distribution of the polymer waste material 7 over at least a part of the inner surface 12 of the second space 4 may be improved by tilting the rotatable hollow chamber 2 a few degrees, for example 3 degrees to 5 degrees from the horizontal axis. In such a configuration, the rotatable hollow chamber 2 is arranged substantially horizontally.

The high temperature wall of the hollow chamber 2 causes thermal decomposition of the polymer waste material 7 within the second space 4, thus converting the polymer waste material 7 into a gas 22 from at least partially pyrolyzed polymer waste and a residue. The residue may comprise inorganics or inorganic contaminants, for instance. The shown hollow chamber 2 comprises a residue outlet 23 for the first space 3 and further another residue outlet 23 for the second space 4.

The hollow chamber 2 further comprises a barrier 14 or seal between the first space 3 and the second space 4. The barrier 14 or seal is configured to allow a fluid flow, particularly a gas flow, from the second space 4 to the first space 3. An opening 15 is provided between the barrier 14 and the polymer waste feed lance 5. The opening 15 may be permeable for the sweep fluid 8 and the gas 22 to flow into the direction from the second space 4 into the first space 3, but impermeable into the opposite direction. The barrier 14 or seal may alternatively also comprise features allowing gas flow, i.e., a plurality of perforations, for instance. The barrier 14 is typically made of metal, a metal alloy or a high temperature resistant fabric.

The shown system 1 even further comprises a plurality of sweep fluid injectors 21 capable of injecting at least one sweep fluid 8 into the first space 3 and additionally into the second space 4. In other words, the system 1 comprises, within a housing (not shown), a cavity 31 or space into which a sweep fluid 8 in gaseous form can be guided. The cavity 31, as a part of the housing, is stationary. A plurality of borings 32 is further provided through the front end 24 of the hollow chamber 2. Thus, a sweep fluid 8 in gaseous form can flow into the first space 3 through the borings 32. The sweep fluid 8 in gaseous form can be guided into the first space 3 in systems 1 having a stationary first space 3 or in systems 1 having either individually or simultaneously rotating first and second spaces 3, 4. In other words, the cavity 31 shown in FIGURE 10 represents a sweep fluid injector 21 for injecting a sweep fluid 8 into the first space 3. One or more identical or other sweep fluid 8 may be additionally injected into the first space 3, for example by utilizing one or more sweep fluid lances as described above. Further, an identical or another sweep fluid 8 is injected into the second space 4 as shown in FIGURE 10. Injection of a sweep fluid 8 into the second space 4 typically takes place through a rear end 25 of the hollow chamber 2. For example, at least one further injection lance may be provided and/or another cavity or space into which a sweep fluid 8 in gaseous form can be guided may be provided, i.e. similar to the front end of the reactor.

Within the embodiment of FIGURE 10, the term "sweep fluid injector" means a specific unit for injecting the at least one sweep fluid 8 into the first space 3 or into the second space 4. Such sweep fluid injector may, for example, comprise at least one sweep fluid injection lance extending into the first space 3 or into the second space 4. Such sweep fluid injector may, for example, comprise a nozzle. Alternatively, the term "sweep fluid injector" may also mean a simple opening in the system 1 through which the at least one sweep fluid 8 can be guided into the first space 3. The system 1 may also comprise a plurality of sweep fluid injectors 21, wherein each sweep fluid injector 21 is capable of injecting a different sweep pluid 8 into the first space 3 or into the second space 4. One sweep fluid injector 21 may be, for example, arranged to inject a condensable gas into the first space 3 or into the second space 4 and another sweep fluid injector 21 may be, for example, arranged to inject a non-condensable gas into the first space 3 or into the second space 4. The plurality of sweep fluid injectors 21 may be, for example, each provided in the form of a separate sweep fluid injection lance. Such sweep fluid injection lances may be, for example, arranged around the polymer waste feed lance 5. In such cases, a protective tube covering at least a part of the plurality of sweep fluid injection lances 21 and at least a part of the polymer waste feed lance 5 may be further provided. As a consequence, various sweep fluids 8 may be guided through at least a part of the protective tube, but separately from the polymer waste feed. The protective tube as well as the polymer waste feed lance 5 and the plurality of injection lances arranged within the protective tube are stationary, i.e. not configured to rotate. Openings 32 may be further instead or in addition provided through the front end 24 of the hollow chamber 2 for guiding at least one sweep fluid 8 into the first space 3 and/or through the rear end 25 of the hollow chamber 2 for guiding at least one sweep fluid 8 into the second space 4, for instance. The at least one sweep fluid injector 21 may be comprised by the polymer waste feed lance 5 or independent from the lance 5. A mass flow of the sweep fluid through the at least one sweep fluid injector 21 and/or a flow velocity may be adjustable. The pressure within the first space 3 and within the second space 4 can be monitored utilizing pressure sensors, respectively.

The sweep fluid 8 may be, for example, at least one of a condensable gas, steam, water, a non-condensable gas, nitrogen, a hydrocarbon, or diesel. As described above, also combinations of aforementioned sweep fluids 8 may be simultaneously injected into the first space 3 and into the second space 4. Water may be, for example, sprayed via at least one nozzle comprised by the at least one sweep fluid injector 21 into the first space 3 or directly on a heated inner surface of the wall of the hollow chamber 2 in the first space 3, thus causing the water spray to instantly vaporize and to generate steam in-situ inside the reactor, thus eliminating the need for a separate steam generating unit. The sweep fluid is then allowed to flow towards the gas outlet 20. The fluid flow from the cavity 31 into the first space 3 avoids a blowback of the gas 22 from at least partially pyrolyzed polymer waste. Thus, the cavity 31 remains free of solid material particles carried towards the gas outlet 20. Use of a condensable gas, steam or water as a sweep fluid 8 is beneficial for aftertreatment purposes, when the sweep fluid 8 has to be separated from the product 13 at a later stage.

Additionally, the system 1 comprises the gas outlet 20 comprised by the first space 3 for collecting a product 13 comprising the at least one sweep fluid 8 and a gas 22 from at least partially pyrolyzed polymer waste. By providing the gas outlet 20 in the first space 3, i.e. away from the second space 4, the content of solid material in the form of lightweight particles or dust carried by the product 13 can be decreased. A pressure gradient between the hollow chamber 2 and the at least one gas outlet 20 is typically in a range between 0.1 - 5 kPa, for example 0.5 - 2 kPa. Typically, a reduced pressure is provided at the location of the at least one gas outlet 20, for example by utilizing a compressor, to create a vacuum in order to remove the at least one sweep fluid 8 and the gas 22 from at least partially pyrolyzed polymer waste from the respective spaces 3, 4.

The inner wall surface 12 within the second space 4 may be partially conical in order to prevent plastic waste material from being distributed in a direction towards the barrier 14. The partially conical inner wall surface may be, for example, obtained by welding a hollow insert 33 having a conical inner surface to the barrier 14 and the inner wall of the hollow chamber 2 within the second space 4.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in treatment of polymer waste.

### REFERENCE SIGNS LIST

- 1: system
- 2: hollow chamber
- 3: first space
- 4: second space
- 5: polymer waste feed lance
- 6: polymer waste feed outlet
- 7: polymer waste
- 8: sweep fluid
- 9: housing
- 10: first heating space
- 11: second heating space
- 12: inner surface of hollow chamber in second chamber
- 13: product
- 14: barrier
- 15: opening
- 16: movable object
- 17: structure
- 18: inner surface of hollow chamber
- 19: heating system
- 20: gas outlet
- 21: injector
- 22: gas
- 23: residue outlet
- 24: front end
- 25: rear end
- 26: first heating gas inlet
- 27: second heating gas inlet
- 28: first heating gas outlet
- 29: second heating gas outlet
- 30: heating zone
- 31: cavity
- 32: boring
- 33: insert
- A: axis of rotation

## Claims

1. A system (1) comprising:
• a hollow chamber (2) comprising a first space (3) and a second space (4), wherein the second space (4) is rotatable or the first space (3) and the second space (4) are rotatable, wherein the hollow chamber (2) comprises a barrier (14) between the first space (3) and the second space (4),
• a heating system (19) configured to heat the second space (4) or to individually heat the first space (3) and the second space (4),a polymer waste feed lance (5) having at least one polymer waste feed outlet (6), wherein the polymer waste feed lance (5) extends within the hollow chamber (2) at least through the first space (3), wherein the system (1) is configured to feed polymer waste (7) only into the second space (4) via the at least one polymer waste feed outlet (6), and wherein an opening (15) is provided between the barrier (14) and the polymer waste feed lance (5), and
• at least one sweep fluid injector (21) capable of injecting at least one sweep fluid (8) into the first space (3) or into the first space (3) and into the second space (4) in order to form a fluid flow towards at least one gas outlet (20) for collecting a product (13) comprising the at least one sweep fluid and a gas (22) from at least partially pyrolyzed polymer waste.

2. The system (1) according to claim 1, wherein the system (1) comprises a compressor arranged downstream of the gas outlet (20).

3. The system (1) according to claim 1 or 2, wherein the hollow chamber (2) is at least partially arranged within a housing (9) comprising the heating system (19), wherein the heating system (19) comprises
• a first heating space (10) configured to receive a first heating gas having a first temperature (T₁) and a second heating space (11) configured to receive a second heating gas having a second temperature (T₂), wherein the first heating space (10) is aligned with the first space (3) and the second heating space (11) is aligned with the second space (4), or
• only the second heating space (11) configured to receive the second heating gas having a second temperature (T₂), wherein the second heating space (11) is aligned with the second space (4).

4. The system (1) according to claim 3, wherein the second heating space (11) comprises a plurality of heating zones (30), wherein each heating zone (30) is configured to receive a heating gas having a specific temperature (T_{Z1}, T_{Zn}).

5. The system (1) according to any one of claims 1-4, wherein the system (1) further comprises at least one movable steel ball or chain (16) arranged within the first space (3).

6. The system (1) according to any one of claims 1-5, wherein the system (1) further comprises at least one structure (17) protruding in the first space (3) from an inner surface (18) of the hollow chamber (2) into the chamber (2).

7. The system (1) according to any one of claims 1-6, wherein the system (1) is configured to inject via the at least one sweep fluid injector (21) at least one of:
• a condensable gas,
• steam,
• water,
• a non-condensable gas,
• nitrogen, or
• a hydrocarbon such as a pyrolysis oil or diesel.

8. The system (1) according to any one of claims 1-7, wherein the gas outlet (20) is comprised either by the first space (3) or the second space (4).

9. A method comprising:
• providing a hollow chamber (2) comprising a first space (3) and a second space (4), wherein the hollow chamber (2) comprises a barrier (14) between the first space (3) and the second space (4),
• rotating the second space (4) or rotating the first space (3) and the second space (4),
• heating the second space (4) or individually heating the first space (3) and the second space (4),
• providing a polymer waste feed lance (5) having at least one polymer waste feed outlet (6), wherein the polymer waste feed lance (5) extends within the hollow chamber (2) at least through the first space (3), and feeding polymer waste only into the second space (4) via the at least one polymer waste feed outlet (6), wherein an opening (15) is provided between the barrier (14) and the polymer waste feed lance (5)
• injecting at least one sweep fluid (8) by at least one sweep fluid injector (21) into the first space (3) or into the first space (3) and into the second space (4) in order to form a fluid flow towards at least one gas outlet (20) for collecting a product (13) comprising the at least one sweep fluid and a gas (22) from at least partially pyrolyzed polymer waste.

10. The method according to claim 9, wherein a wall temperature of the hollow chamber (2) is in the first space (3) and in the second space (4) in a range between 500 - 800 °C.

11. The method according to claim 9 or 10, wherein the method further comprises:
• arranging the hollow chamber at least partially within a housing (9) having a first heating space (10) and a second heating space (11),
• receiving a first heating gas having a first temperature (T₁) in the first heating space (10), wherein the first heating space (10) is aligned with the first space (3), and
• receiving a second heating gas having a second temperature (T₂) in the second heating space (11), wherein the second heating space (11) is aligned with the second space (4).

12. The method according to any one of claims 9 - 11, wherein the sweep fluid is at least one of:
• a condensable gas,
• steam,
• water,
• a non-condensable gas,
• nitrogen,
• a hydrocarbon such as a pyrolysis oil or diesel

13. The method according to any one of claims 9 - 12, wherein a pressure gradient between the hollow chamber (2) and the at least one gas outlet (20) is in a range between 0.1- 5 kPa.

14. The method according to any one of claims 9 - 13, the method further comprising:
• pre-melting or extruding the polymer waste prior to feeding the polymer waste into the second space (4).

15. The method according to any one of claims 9 - 14, the method further comprising:
• liquifying the collected gas downstream of the gas outlet (20).

## Patentansprüche

1. System (1), umfassend:
- eine Hohlkammer (2), die einen ersten Raum (3) und einen zweiten Raum (4) umfasst, wobei der zweite Raum (4) drehbar ist oder der erste Raum (3) und der zweite Raum (4) drehbar sind, wobei die Hohlkammer (2) eine Barriere (14) zwischen dem ersten Raum (3) und dem zweiten Raum (4) umfasst,
- ein Heizsystem (19), das konfiguriert ist, um den zweiten Raum (4) zu erhitzen oder um den ersten Raum (3) und den zweiten Raum (4) einzeln zu erhitzen, eine Polymerabfall-Zufuhrlanze (5), die mindestens einen Polymerabfall-Zufuhrauslass (6) aufweist, wobei sich die Polymerabfall-Zufuhrlanze (5) innerhalb der Hohlkammer (2) mindestens durch den ersten Raum (3) hindurch erstreckt, wobei das System (1) konfiguriert ist, um Polymerabfall (7) nur über den mindestens einen Polymerabfall-Zufuhrauslass (6) in den zweiten Raum (4) zuzuführen, und wobei zwischen der Barriere (14) und der Polymerabfall-Zufuhrlanze (5) eine Öffnung (15) bereitgestellt ist, und
- mindestens einen Spülfluidinjektor (21), der in der Lage ist, mindestens ein Spülfluid (8) in den ersten Raum (3) oder in den ersten Raum (3) und in den zweiten Raum (4) zu injizieren, um einen Fluidstrom in Richtung mindestens eines Gasauslasses (20) zu bilden, um ein Produkt (13) zu sammeln, welches das mindestens eine Spülfluid und ein Gas (22) aus mindestens teilweise pyrolysiertem Polymerabfall umfasst.

2. System (1) nach Anspruch 1, wobei das System (1) einen Kompressor umfasst, der stromabwärts des Gasauslasses (20) angeordnet ist.

3. System (1) nach Anspruch 1 oder 2, wobei die Hohlkammer (2) mindestens teilweise innerhalb eines Gehäuses (9) angeordnet ist, welches das Heizsystem (19) umfasst, wobei das Heizsystem (19) umfasst
- einen ersten Heizraum (10), der konfiguriert ist, um ein erstes Heizgas, das eine erste Temperatur (T₁) aufweist, aufzunehmen, und einen zweiten Heizraum (11), der konfiguriert ist, um ein zweites Heizgas, das eine zweite Temperatur (T₂) aufweist, aufzunehmen, wobei der erste Heizraum (10) mit dem ersten Raum (3) ausgerichtet ist und der zweite Heizraum (11) mit dem zweiten Raum (4) ausgerichtet ist, oder
- nur der zweite Heizraum (11) konfiguriert ist, um das zweite Heizgas, das eine zweite Temperatur (T₂) aufweist, aufzunehmen, wobei der zweite Heizraum (11) mit dem zweiten Raum (4) ausgerichtet ist.

4. System (1) nach Anspruch 3, wobei der zweite Heizraum (11) eine Vielzahl von Heizzonen (30) umfasst, wobei jede Heizzone (30) konfiguriert ist, um ein Heizgas, das eine bestimmten Temperatur (T_{z1}, T_{zn}) aufweist, aufzunehmen.

5. System (1) nach einem der Ansprüche 1-4, wobei das System (1) weiter mindestens eine bewegliche Stahlkugel oder -kette (16) umfasst, die innerhalb des ersten Raums (3) angeordnet ist.

6. System (1) nach einem der Ansprüche 1-5, wobei das System (1) weiter mindestens eine Struktur (17) umfasst, die im ersten Raum (3) von einer Innenoberfläche (18) der Hohlkammer (2) in die Kammer (2) hervorsteht.

7. System (1) nach einem der Ansprüche 1-6, wobei das System (1) konfiguriert ist, um über den mindestens einen Spülfluidinjektor (21) mindestens eines zu injizieren von
- einem kondensierbaren Gas,
- Dampf,
- Wasser,
- einem nicht kondensierbaren Gas,
- Stickstoff, oder
- einem Kohlenwasserstoff, wie beispielsweise Pyrolyseöl oder Diesel.

8. System (1) nach einem der Ansprüche 1-7, wobei der Gasauslass (20) entweder aus dem ersten Raum (3) oder dem zweiten Raum (4) umfasst ist.

9. Verfahren, umfassend:
- Bereitstellen einer Hohlkammer (2), die einen ersten Raum (3) und einen zweiten Raum (4) umfasst, wobei die Hohlkammer (2) eine Barriere (14) zwischen dem ersten Raum (3) und dem zweiten Raum (4) umfasst,
- Drehen des zweiten Raums (4) oder Drehen des ersten Raums (3) und des zweiten Raums (4),
- Erhitzen des zweiten Raums (4) oder einzelnes Erhitzen des ersten Raums (3) und des zweiten Raums (4),
- Bereitstellen einer Polymerabfall-Zufuhrlanze (5), die mindestens einen Polymerabfall-Zufuhrauslass (6) aufweist, wobei sich die Polymerabfall-Zufuhrlanze (5) innerhalb der Hohlkammer (2) mindestens durch den ersten Raum (3) hindurch erstreckt, und Zuführen von Polymerabfall nur über den mindestens einen Polymerabfall-Zufuhrauslass (6) in den zweiten Raum (4), wobei zwischen der Barriere (14) und der Polymerabfall-Zufuhrlanze (5) eine Öffnung (15) bereitgestellt ist
- injizieren von mindestens einem Spülfluid (8) durch mindestens einen Spülfluidinjektor (21) in den ersten Raum (3) oder in den ersten Raum (3) und in den zweiten Raum (4) zu injizieren, um einen Fluidstrom in Richtung mindestens eines Gasauslasses (20) zu bilden, um ein Produkt (13) zu sammeln, welches das mindestens eine Spülfluid und ein Gas (22) aus mindestens teilweise pyrolysiertem Polymerabfall umfasst.

10. Verfahren nach Anspruch 9, wobei eine Wandtemperatur der Hohlkammer (2) im ersten Raum (3) und im zweiten Raum (4) in einem Bereich zwischen 500 - 800°C liegt.

11. Verfahren nach Anspruch 9 oder 10, wobei das Verfahren weiter umfasst:
- Anordnen des Hohlraums mindestens teilweise innerhalb eines Gehäuses (9), das einen ersten Heizraum (10) und einen zweiten Heizraum (11) aufweist,
- Empfangen eines ersten Heizgases, das eine erste Temperatur (T₁) aufweist, im ersten Heizraum (10), wobei der erste Heizraum (10) mit dem ersten Raum (3) ausgerichtet ist, und
- Empfangen eines zweiten Heizgases, das eine zweite Temperatur (T₂) aufweist, im zweiten Heizraum (11), wobei der zweite Heizraum (11) mit dem zweiten Raum (4) ausgerichtet ist.

12. Verfahren nach einem der Ansprüche 9-11, wobei das Spülfluid mindestens eines ist von:
- einem kondensierbaren Gas,
- Dampf,
- Wasser,
- einem nicht kondensierbaren Gas,
- Stickstoff
- einem Kohlenwasserstoff, wie beispielsweise Pyrolyseöl oder Diesel

13. Verfahren nach einem der Ansprüche 9-12, wobei ein Druckgradient zwischen der Hohlkammer (2) und dem mindestens einen Gasauslass (20) in einem Bereich zwischen 0,1 -5 kPa liegt.

14. Verfahren nach einem der Ansprüche 9 - 13, wobei das Verfahren weiter umfasst:
- Vorschmelzen oder Extrudieren des Polymerabfalls vor dem Zuführen des Polymerabfalls in den zweiten Raum (4).

15. Verfahren nach einem der Ansprüche 9 - 14, wobei das Verfahren weiter umfasst:
- Verflüssigen des gesammelten Gases stromabwärts des Gasauslasses (20).

## Revendications

1. Système (1) comprenant :
- une chambre creuse (2) comprenant un premier espace (3) et un second espace (4), dans lequel le second espace (4) est rotatif ou le premier espace (3) et le second espace (4) sont rotatifs, dans lequel la chambre creuse (2) comprend une barrière (14) entre le premier espace (3) et le second espace (4),
- un système de chauffage (19) configuré pour chauffer le second espace (4) ou pour chauffer individuellement le premier espace (3) et le second espace (4), une lance d'alimentation en déchets de polymère (5) présentant au moins une sortie d'alimentation en déchets de polymère (6), dans lequel la lance d'alimentation en déchets de polymère (5) s'étend à l'intérieur de la chambre creuse (2) au moins à travers le premier espace (3), dans lequel le système (1) est configuré pour introduire des déchets de polymère (7) uniquement dans le second espace (4) via la au moins une sortie d'alimentation en déchets de polymère (6), et dans lequel une ouverture (15) est prévue entre la barrière (14) et la lance d'alimentation en déchets de polymère (5), et
- au moins un injecteur de fluide de balayage (21) apte à injecter au moins un fluide de balayage (8) dans le premier espace (3) ou dans le premier espace (3) et dans le second espace (4) afin de former un flux de fluide vers au moins une sortie de gaz (20) pour collecter un produit (13) comprenant le au moins un fluide de balayage et un gaz (22) issu de déchets de polymère au moins partiellement pyrolysés.

2. Système (1) selon la revendication 1, dans lequel le système (1) comprend un compresseur agencé en aval de la sortie de gaz (20).

3. Système (1) selon la revendication 1 ou 2, dans lequel la chambre creuse (2) est au moins partiellement agencée à l'intérieur d'un boîtier (9) comprenant le système de chauffage (19), dans lequel le système de chauffage (19) comprend
- un premier espace de chauffage (10) configuré pour recevoir un premier gaz de chauffage présentant une première température (T₁) et un second espace de chauffage (11) configuré pour recevoir un second gaz de chauffage présentant une seconde température (T₂), dans lequel le premier espace de chauffage (10) est aligné avec le premier espace (3) et le second espace de chauffage (11) est aligné avec le second espace (4), ou
- uniquement le second espace de chauffage (11) configuré pour recevoir le second gaz de chauffage présentant une seconde température (T₂), dans lequel le second espace de chauffage (11) est aligné avec le second espace (4).

4. Système (1) selon la revendication 3, dans lequel le second espace de chauffage (11) comprend une pluralité de zones de chauffage (30), dans lequel chaque zone de chauffage (30) est configurée pour recevoir un gaz de chauffage présentant une température spécifique (T_{z1}, T_{zn}).

5. Système (1) selon l'une quelconque des revendications 1-4, dans lequel le système (1) comprend en outre au moins une bille ou une chaîne d'acier mobile (16) agencée à l'intérieur du premier espace (3).

6. Système (1) selon l'une quelconque des revendications 1-5, dans lequel le système (1) comprend en outre au moins une structure (17) faisant saillie dans le premier espace (3) à partir d'une surface intérieure (18) de la chambre creuse (2) dans la chambre (2).

7. Système (1) selon l'une quelconque des revendications 1-6, dans lequel le système (1) est configuré pour injecter via le au moins un injecteur de fluide de balayage (21) au moins l'un parmi :
- un gaz condensable,
- de la vapeur,
- de l'eau,
- un gaz non condensable,
- de l'azote ou
- un hydrocarbure tel qu'une huile de pyrolyse ou du carburant diesel.

8. Système (1) selon l'une quelconque des revendications 1-7, dans lequel la sortie de gaz (20) est constituée soit par le premier espace 3), soit par le second espace (4).

9. Procédé, comprenant :
- la fourniture d'une chambre creuse (2) comprenant un premier espace (3) et un second espace (4), dans lequel la chambre creuse (2) comprend une barrière (14) entre le premier espace (3) et le second espace (4),
- la mise en rotation du second espace (4) ou la mise en rotation du premier espace (3) et du second espace (4),
- le chauffage du second espace (4) ou le chauffage individuel du premier espace (3) et du second espace (4),
- la fourniture d'une lance d'alimentation en déchets de polymère (5) présentant au moins une sortie d'alimentation en déchets de polymère (6), dans lequel la lance d'alimentation en déchets de polymère (5) s'étend à l'intérieur de la chambre creuse (2) au moins à travers le premier espace (3), et l'introduction de déchets de polymère uniquement dans le second espace (4) via la au moins une sortie d'alimentation en déchets de polymère (6), dans lequel une ouverture (15) est prévue entre la barrière (14) et la lance d'alimentation en déchets de polymère (5),
- l'injection d'au moins un fluide de balayage (8) par au moins un injecteur de fluide de balayage (21) dans le premier espace (3) ou dans le premier espace (3) et dans le second espace (4) afin de former un flux de fluide vers au moins une sortie de gaz (20) pour collecter un produit (13) comprenant le au moins un fluide de balayage et un gaz (22) issu de déchets de polymère au moins partiellement pyrolysés.

10. Procédé selon la revendication 9, dans lequel une température de paroi de la chambre creuse (2) dans le premier espace (3) et dans le second espace (4) se situe dans une plage comprise entre 500 et 800 °C.

11. Procédé selon la revendication 9 ou 10, dans lequel le procédé comprend en outre :
- l'agencement de la chambre creuse au moins partiellement à l'intérieur d'un boîtier (9) présentant un premier espace de chauffage (10) et un second espace de chauffage (11),
- la réception d'un premier gaz de chauffage présentant une première température (T₁) dans le premier espace de chauffage (10), dans lequel le premier espace de chauffage (10) est aligné avec le premier espace (3), et
- la réception d'un second gaz de chauffage présentant une seconde température (T₂) dans le second espace de chauffage (11), dans lequel le second espace de chauffage (11) est aligné avec le second espace (4).

12. Procédé selon l'une quelconque des revendications 9-11, dans lequel le fluide de balayage est au moins l'un parmi :
- un gaz condensable,
- de la vapeur,
- de l'eau,
- un gaz non condensable,
- de l'azote,
- un hydrocarbure tel qu'une huile de pyrolyse ou du carburant diesel

13. Procédé selon l'une quelconque des revendications 9-12, dans lequel un gradient de pression entre la chambre creuse (2) et la au moins une sortie de gaz (20) se situe dans une plage comprise entre 0,1 et 5 kPa.

14. Procédé selon l'une quelconque des revendications 9-13, le procédé comprenant en outre :
- la pré-fusion ou l'extrusion des déchets de polymère avant d'introduire les déchets de polymère dans le second espace (4).

15. Procédé selon l'une quelconque des revendications 9-14, le procédé comprenant en outre :
- la liquéfaction du gaz collecté en aval de la sortie de gaz (20).
